# FASCICULE DE BREVET EUROPEEN

(11) **EP 4 097 336 B1**
(45) Date de publication et mention de la délivrance du brevet: **20.11.2024**
(21) Numéro de dépôt: 21705594.6
(22) Date de dépôt: 22.01.2021
(51) Int. Cl.: F01D 25/24, F01D 11/12

(54) **CARTER DE TURBOMACHINE D'AÉRONEF ET SON PROCÉDÉ DE FABRICATION**
GEHÄUSE EINER FLUGZEUGTURBOMASCHINE UND VERFAHREN ZU DESSEN HERSTELLUNG
AIRCRAFT TURBOMACHINE CASING AND METHOD OF MANUFACTURING SAME

(30) Priorité: 29.01.2020 FR 2000863
(43) Date de publication de la demande: 07.12.2022
(73) Titulaire: SAFRAN AIRCRAFT ENGINES, 75015 Paris (FR)
(72) Inventeur: MALFROY, Ambroise Nicolas Marie, 77550 MOISSY-CRAMAYEL (FR); BROUSSAIS-COLELLA, Nicolas François Paul, 77550 MOISSY-CRAMAYEL (FR); PERLIN, Matthieu Patrick Jean Roger, 77550 MOISSY-CRAMAYEL (FR); RETIVEAU-LECA, Adrienne, 77550 MOISSY-CRAMAYEL (FR)
(74) Mandataire: Gevers & Orès
(86) Numéro de dépôt international: PCT/FR2021/050114
(87) Numéro de publication internationale: WO 2021/152243

(56) Documents cités:
- WO-A1-2019/179994
- FR-A1- 3 051 828
- FR-A1- 3 074 218
- US-B2- 8 202 041

## Description

### Domaine technique de l'invention

La présente invention concerne un carter, en particulier de soufflante, pour une turbomachine d'aéronef, et son procédé de fabrication.

### Arrière-plan technique

L'état de la technique comprend notamment les documents FR-A1-2 997 725, FR-A1-2 997 726, FR-A1-3 005 100, FR-A1-3 074 218, FR-A1-3 051 828, US-B2-8 202 041 et FR-A1-3 060 7438.

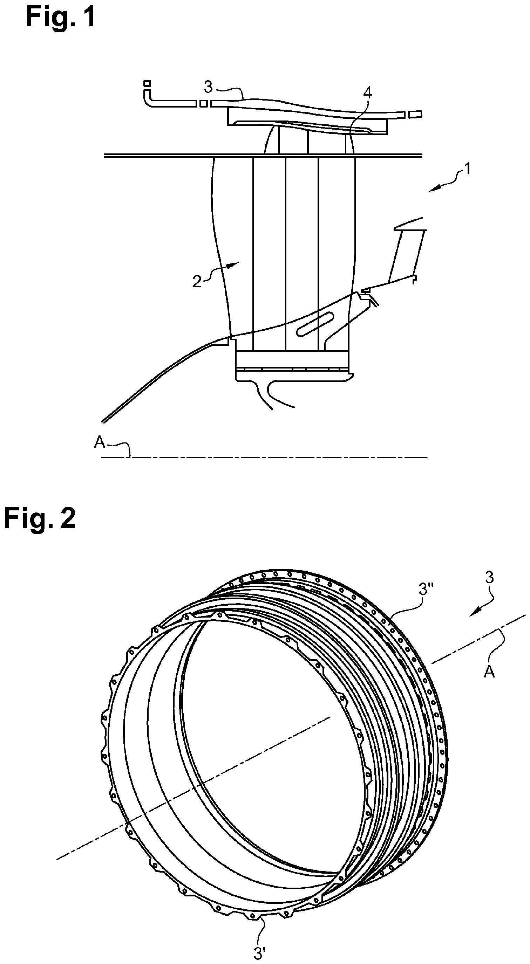

La figure 1 représente partiellement une soufflante d'une turbomachine d'aéronef.

De façon classique, une turbomachine comprend d'amont en aval, c'est-à-dire dans le sens d'écoulement des flux de gaz, une soufflante, un ou plusieurs compresseurs, une chambre de combustion, une ou plusieurs turbines, et une tuyère d'éjection des gaz de combustion sortant de la ou des turbines.

La soufflante 1 comporte une roue à aubes 2 qui est entourée par un carter 3 de soufflante, encore appelé carter de rétention du fait de sa fonction de rétention des aubes en cas de rupture de celles-ci, ou en cas d'entrée de débris dans la soufflante.

Comme cela est visible sur la figure 2, le carter de soufflante 3 comprend typiquement une enveloppe annulaire 9 d'axe de révolution A qui s'étend autour des aubes de soufflante 2 de la turbomachine. Cette enveloppe comprend une bride annulaire de fixation 3', 3" à chacune de ses extrémités axiales. Ces brides 3', 3" sont utilisées pour fixer le carter 3 à des parois annulaires de la nacelle de la turbomachine.

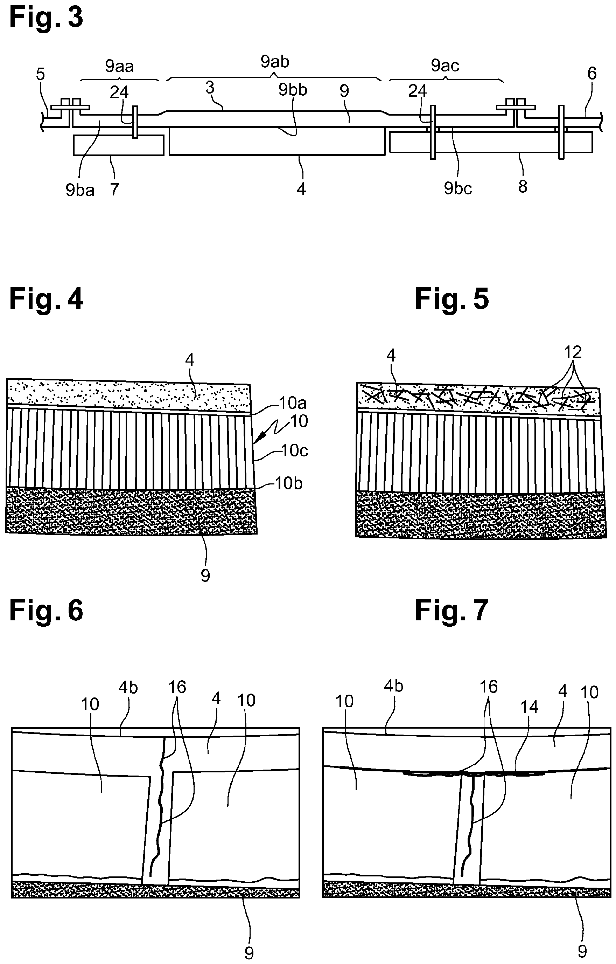

La figure 3 est une coupe à caractère schématique illustrant un carter de soufflante 3 selon l'art antérieur.

Le carter de soufflante 3 est lié, à l'amont, à une manche d'entrée d'air 5, et, à l'aval, à une virole 6 de carter intermédiaire. Le carter porte également des panneaux acoustiques amont 7 et des panneaux acoustiques aval 8. Le carter de soufflante 3 comporte encore une couche annulaire 4 de matière abradable, positionnée sur une surface annulaire interne de l'enveloppe, entre les panneaux amont 7 et les panneaux aval 8.

En plus de la fonction de rétention, le carter de soufflante 3 est également conçu pour :
- assurer la continuité de la veine aérodynamique par l'intermédiaire de la couche annulaire en matériau abradable ;
- assurer une continuité mécanique (des efforts et des moments) entre la manche d'entrée d'air 5 et la virole 6 de carter intermédiaire ;
- permettre la fixation des panneaux 7, 8 et de la couche 4,
- permettre la fixation d'équipements et de supports connus en soi;
- tenir les spécifications de règlementation au feu et aux fuites ;
- permettre une continuité du courant électrique pour la tenue à la foudre, etc. Comme cela est visible dans la vue en coupe à plus grande échelle de la figure 4, des panneaux 10 supports d'abradable sont intercalés entre l'enveloppe 9 et la couche 4. Ces panneaux 10 sont en général formés d'une structure sandwich comportant une peau 10b recouverte d'une couche alvéolaire 10c du type en nid d'abeilles (c'est-à-dire à alvéoles ouvertes). La peau 10b s'étend entre un côté de la couche alvéolaire 10c et l'enveloppe 9, et une couche de colle 10a s'étend entre l'autre côté de la couche alvéolaire 10c et la couche 4.

Les panneaux 10 sont collés sur une surface interne de l'enveloppe 9 et la couche abradable 4 est en général obtenue par étalement et polymérisation d'une pâte composée d'un mélange de constituants préalablement mélangés. La couche 4 est par exemple formée à partir d'une résine époxyde bicomposant de densification chargée en microbilles de verre. La couche abradable 4 est utilisée pour assurer un jeu minimum entre les sommets des aubes de soufflante 2 et le carter 3. Lors de la première rotation de la soufflante, ces aubes 2 viennent éroder la couche et ajuster le jeu entre les sommets des aubes et la couche 4, de manière optimisée pour un moteur donné. Le rendement du moteur est ainsi assuré par l'adaptation de la piste de cette couche à chaque jeu d'aubes pour chaque moteur.

Dans la technique actuelle, la couche abradable 4 a une épaisseur relativement importante, jusqu'à 8mm. Lors du mélange des constituants, qui sont visqueux, une attention particulière est donnée pour limiter la porosité due au mélange et au dégazage tout en assurant un excellent mélange des deux composants. Une fois la dépose réalisée, la polymérisation est assurée soit à température ambiante, soit en étuve. Il est fréquent que des porosités apparaissent tout de même après polymérisation et il est alors nécessaire d'effectuer des retouches locales.

Malgré le fait que le procédé de dépose soit optimisé dans le but de diminuer les porosités incluses dans la couche abradable, il réside tout de même certaines d'entre elles dû au dégazage de la matière ou à la méthode de dépose sous la surface visible.

Pour cette raison, il arrive pour certains moteurs que des porosités soient révélées après rodage au montage ou lors des essais de réception ou en service. De plus, le matériau de la couche abradable possédant une faible cohésion, il est sensible aux pertes locales, en raison de porosités sous-jacentes, et aux fissurations.

La présente invention propose une solution à au moins une partie des problèmes de la technique antérieure, qui est simple, efficace et économique.

### Résumé de l'invention

Selon un premier aspect non couvert pas l'invention, la divulgation concerne un carter de turbomachine d'aéronef, ce carter comportant :
- une enveloppe annulaire s'étendant autour d'un axe A et réalisée dans un matériau composite comportant des fibres tissées et noyées dans une résine,
- une couche annulaire en matériau abradable s'étendant à l'intérieur de l'enveloppe, autour de l'axe A, et obtenue par étalement et polymérisation d'une pâte, et
- des panneaux supports s'étendant autour de l'axe A et intercalés entre l'enveloppe et la couche abradable,
caractérisé en ce que ladite couche est associée à au moins un renfort fibreux. Pour pallier aux problèmes en service lié à la faible cohésion du matériau, et sa sensibilité aux arrachements et aux fissurations, il est ainsi proposé de renforcer ce dernier par un ou plusieurs types de renforts fibreux afin d'améliorer sa cohésion.

Le carter selon le premier aspect de la divulgation peut comprendre une ou plusieurs des caractéristiques suivantes, considérées indépendamment les unes des autres ou en combinaison les unes avec les autres qui ne font pas partie de la protection demandée :
- des fibres de renfort, ayant par exemple une longueur comprise entre 0,5 et 20mm, sont dispersées dans la pâte et la couche abradable ; pour régler les problèmes de porosités ou pour des pertes de matières larges (hors porosités), l'idée est d'ajouter lors du mélange des constituants de la couche abradable des renforts fibreux sous forme de fibres, par exemple de verre, d'aramide ou de carbone, en fonction de l'impact sur la densité du matériau ; cela permet de renforcer la résine dans toutes les directions aux sollicitations en traction, compression et cisaillement ;
- des nappes ou tissus de renfort sont noyés dans la couche abradable ou intercalés entre la couche et les panneaux ;
- les panneaux sont séparés les uns des autres par des jeux comblés avec ladite pâte, au moins certains des nappes ou tissus recouvrant ces jeux ; concernant les problèmes de fissuration, il est ainsi possible d'utiliser dans les zones de jonction des panneaux, des bandes de renfort fibreux tissés ou non afin de stopper la fissuration de la couche abradable ; ces bandes peuvent par exemple être entrecroisées pour favoriser leur mouillage par la couche abradable ;
- une couche de mousse est intercalée entre les panneaux et la couche abradable ; pour pallier à la fois aux problèmes de tenue mécanique et de porosité, il a aussi été envisagé de remplacer la majeure partie de l'épaisseur de la couche abradable par une couche de mousse (collée par exemple avec un adhésif ou via la couche abradable sur les panneaux) ; cette alternative permet de diminuer la quantité de pâte abradable utilisée et donc de faciliter le dégazage de la matière, ce qui diminue drastiquement le nombre de porosités ; de plus, la mousse peu absorber les déformations subies par cisaillement dans les zones de jonction de panneaux ; associée à des fibres comme évoqué ci-dessus, cette mousse permet de plus d'augmenter à la fois la tenue cohésive de la matière, le mouillage avec le substrat, réduire le nombre de porosités et réduire les coûts de la piste abradable ; la couche restante d'abradable permet d'assurer la fonction d'abradabilité du support assurant les jeux avec les sommets des aubes.

La présente divulgation concerne également une turbomachine d'aéronef, comportant un carter tel que décrit ci-dessus selon le premier aspect de la divulgation, en particulier qui s'étend autour d'une soufflante de cette turbomachine.

La présente divulgation concerne également un procédé de fabrication d'un carter tel que décrit ci-dessus selon le premier aspect de la divulgation, dans lequel il comprend les étapes de :
- collage des panneaux sur une surface annulaire interne de l'enveloppe,
- préparation de la pâte et étalement sur une surface annulaire interne, par exemple des panneaux, pour former la couche abradable, cette couche étant associée à au moins un renfort fibreux.

Le procédé peut comprendre une ou plusieurs des caractéristiques ou étapes suivantes, considérées indépendamment les unes des autres ou en combinaison les unes avec les autres qui ne font pas partie de la protection demandée :
- des fibres de renfort sont mélangées à la pâte, préalablement à son étalement, ou des nappes ou tissus de renfort sont disposés sur la surface annulaire interne des panneaux avant l'étalement de la pâte ;
- la pâte est étalée sur la surface annulaire interne d'une couche de mousse préalablement collée sur une surface annulaire interne des panneaux ;
- la pâte est étalée en plusieurs sous-étape, chaque sous-étape comportant le dépôt de pâte sous forme d'une boule sur la surface annulaire interne, l'étalement de la pâte sur la surface de façon à uniformiser son épaisseur, cette pâte s'étendant sur une portion angulaire prédéterminée de la surface, puis réalisation d'un chanfrein au niveau d'un bord de cette pâte de façon à ce que la pâte destinée à être déposée et étalée sur une portion angulaire adjacente puisse recouvrir ce bord chanfreiné.

L'invention concerne un carter de turbomachine d'aéronef selon la revendication 1, une turbomachine d'aéronef comportant un tel carter selon la revendication 8 et un procédé de fabrication d'un carter selon la revendication 9. Les autres aspects de l'invention sont décrit dans les revendications dépendantes.

Selon un second aspect non couvert par l'invention, la divulgation concerne un procédé de fabrication d'un carter de turbomachine d'aéronef, ce carter comportant :
- une enveloppe annulaire s'étendant autour d'un axe A et réalisée dans un matériau composite comportant des fibres tissées et noyées dans une résine,
- une couche annulaire en matériau abradable s'étendant à l'intérieur de l'enveloppe, et
- des panneaux supports s'étendant autour de l'axe A et intercalés entre l'enveloppe et la couche abradable,
caractérisé en ce qu'il comprend les étapes comportant :
a) la préparation d'une pâte par mélange d'au moins deux composants,
b) la dépose de la pâte sur une surface annulaire interne des panneaux,
c) l'étalement de la pâte au moyen d'au moins un rouleau s'étendant sensiblement parallèlement à l'axe A et destinée à rouler sur des anneaux de guidage disposés de part et d'autre des panneaux ou de l'enveloppe, coaxialement à celle-ci, de façon à former un secteur angulaire de la couche abradable qui s'étend sur un angle prédéterminée autour de l'axe A,
d) la formation d'un chanfrein à une extrémité circonférentielle du secteur ainsi formé,
e) et la répétition des étapes a) à d) jusqu'à ce que plusieurs secteurs angulaires consécutifs de la couche abradable soient formés et recouvrent l'intégralité de la surface interne des panneaux, les secteurs formés à l'étape e) comportant chacun une extrémité circonférentielle recouvrant l'extrémité circonférentielle chanfreinée du secteur précédemment déposé.

Le procédé selon le second aspect de la divulgation permet de former la couche abradable sous forme de secteurs consécutifs dont les bords adjacents aux extrémités circonférentielles sont chanfreinés et se recouvrent mutuellement. Cette façon de former la couche abradable permet de limiter l'apparition de porosités et de défauts dans la couche.

Dans un cas particulier de mise en oeuvre du procédé, le procédé a permis de réduire de 80% la durée de fabrication du carter et en particulier de 50% la durée consacrée à la retouche du carter en fin de procédé.

Le procédé selon le second aspect de la divulgation peut comprendre une ou plusieurs des étapes ou caractéristiques suivantes, considérées indépendamment les unes des autres ou en combinaison les unes avec les autres qui ne font pas partie de la protection demandée :
- la pâte est à base de résine époxyde, et est de préférence chargée par exemple avec des microbilles de verre ;
- le mélange est réalisé à l'étape a) par incorporation des composants dans un pot d'une machine qui comprend au moins un élément rotatif de mélange selon deux axes de rotation non parallèles ;
- l'élément rotatif tourne autour desdits axes à une vitesse comprise entre 400 et 1000 tours/minute, et de préférence entre 600 et 900 tours/minutes, et pendant une durée comprise entre 50 et 200 secondes, et de préférence entre 80 et 120 secondes ;
- ledit pot comprend un fond extractible depuis l'intérieur jusqu'à l'extérieur du pot, par exemple par l'intermédiaire d'un piston, de façon à faciliter le retrait de la pâte de ce pot ;
- la pâte déposée à l'étape b) à une masse comprise entre 400 et 2600g ;
- le carter est positionné de façon à ce que l'axe A soit sensiblement horizontal lors des étapes b) à e) ;
- le carter est mis en rotation autour de l'axe A lors de l'étape c) ou de chaque étape c) ;
- la pâte est déposée à l'étape b) sous la forme d'un boudin ou d'une boule ;
- la couche abradable a une épaisseur comprise entre 3 et 10mm, et de préférence entre 5 et 8mm ;
- le procédé comprend également, entre les étapes b) et c) et/ou entre les étapes c) et d), une étape i) de raclement de la pâte ou du secteur au moyen d'une lame ;
- un film plastique est intercalé entre ledit au moins un rouleau et la pâte lors de l'étape c) ;
- ledit au moins un rouleau utilisé à l'étape c) à une forme profilée non cylindrique ;
- les anneaux de guidage à l'étape c) sont sollicités axialement l'un vers l'autre et en appui contre les panneaux par des bandes élastiques s'étendant entre les anneaux de guidage ;
- le chanfrein formé à l'étape d) s'étend sur toute la dimension axiale du secteur et est orienté à environ 45° par rapport à une normale à la surface interne de ce secteur ;
- le procédé comprend une étape finale g) d'usinage de finition de la surface interne de la couche abradable, lors de laquelle le carter est positionné de sorte que son axe A soit sensiblement vertical ;
- le procédé comprend une étape préalable de collage des panneaux sur une surface annulaire interne de l'enveloppe.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 déjà discutée montre partiellement une vue en coupe d'une soufflante d'une turbomachine d'aéronef selon l'état de la technique ;
[Fig. 2] La figure 2 déjà discutée montre une vue en perspective d'un carter de soufflante selon l'état de la technique ;
[Fig. 3] La figure 3 déjà discutée montre une coupe partielle à caractère schématique d'un carter de soufflante selon l'état de la technique ;
[Fig. 4] La figure 4 est une vue schématique en coupe transversale d'un carter selon l'état de la technique ;
[Fig. 5] La figure 5 est une vue schématique en coupe transversale d'un carter selon l'invention ;
[Fig. 6] La figure 6 est une vue schématique en coupe transversale d'un carter selon l'état de la technique, et montre la propagation d'une fissure ;
[Fig. 7] La figure 7 est une vue schématique en coupe transversale d'un carter selon l'invention, et montre la limitation de la propagation d'une fissure;
[Fig. 8] La figure 8 est une vue similaire à celle de la figure 6 et illustre une variante de réalisation ou un autre aspect de l'invention ;
[Fig.9] La figure 9 est un organigramme montrant des étapes d'un procédé de fabrication selon l'invention ;
[Fig.10] La figure 10 est une vue schématique partielle en coupe transversale d'un carter de turbomachine d'aéronef ;
[Fig.11] La figure 11 est une vue très schématique d'une machine de mélange de composants en vue de la préparation d'une pâte ;
[Fig.12] Les figures 12a à 12e sont des vues schématiques d'un carter et d'un opérateur procédant à l'étalement d'une pâte sur le carter en vue de la réalisation d'un couche abradable ;
[Fig.13] La figure 13 est une vue très schématique en coupe transversale d'une couche abradable en cours d'étalement ;
[Fig.14] La figure 14 est une vue schématique d'une installation de fabrication d'un carter de turbomachine ;
[Fig.15] La figure 15 est une vue schématique à plus grande échelle d'une partie de l'installation de la figure 14 et illustre des étapes d'un procédé de fabrication selon l'invention ;
[Fig.16] La figure 16 est une vue schématique à plus grande échelle d'une partie de l'installation de la figure 14 et illustre d'autres étapes d'un procédé de fabrication selon l'invention ; et
[Fig.17] La figure 17 est une vue schématique à plus grande échelle d'une partie de l'installation de la figure 14 et illustre une autre étape d'un procédé de fabrication selon l'invention.

### Description détaillée de l'invention

Dans la description qui suit, l'invention est appliquée à un carter de soufflante 3. L'invention n'est toutefois pas limitée à ce type de carter et peut être appliquée à d'autres carters d'une turbomachine.

Le carter 3 auquel le procédé selon l'invention est appliqué a une forme générale annulaire autour d'un axe A. Ce carter 3 comprend :
- une enveloppe annulaire 9 s'étendant autour de l'axe A et réalisée dans un matériau composite comportant des fibres tissées et noyées dans une résine, et
- une couche annulaire 4 en matériau abradable disposée à l'intérieur de l'enveloppe 9.

Des panneaux supports 10 sont intercalés entre la couche 4 et l'enveloppe 9 et ont une structure sandwich, comme évoqué dans ce qui précède. Ils comprennent notamment une couche alvéolaire du type nid d'abeille qui comprend des alvéoles ouvertes par opposition aux alvéoles ou cellules fermées d'une mousse par exemple.

Pour éviter les problèmes évoqués dans ce qui précède, la couche 4 peut être associée à au moins un renfort fibreux, qui peut être d'un ou plusieurs types choisis par exemple parmi des fibres, des nappes ou tissus de fibres, etc. Un tissu est formé de fibres tissées les unes aux autres par opposition à une nappe qui est formée de fibres non tissées.

Dans l'exemple représenté à la figure 5, des fibres de renfort 12, ayant par exemple une longueur comprise entre 0,5 et 20mm, sont dispersées dans la couche abradable 4. Il s'agit par exemple de fibres de verre, d'aramide ou de carbone.

Dans l'exemple représenté à la figure 7, des nappes ou tissus de renfort 14 sont noyés dans la couche abradable 4 ou intercalés entre la couche 4 et les panneaux 10. Des nappes ou tissus 14 peuvent être utilisés en combinaison avec des fibres 12 mélangés à la pâte abradable.

Dans le cas illustré où les panneaux 10 sont séparés les uns des autres par des jeux J comblés avec la pâte de la couche, au moins certains des nappes ou tissus 14 recouvrent ces jeux. On évite ainsi à des fissures 16 qui apparaîtraient dans ces jeux J, de se propager jusqu'à la surface libre 4b de la couche abradable 4 (figures 6 et 7).

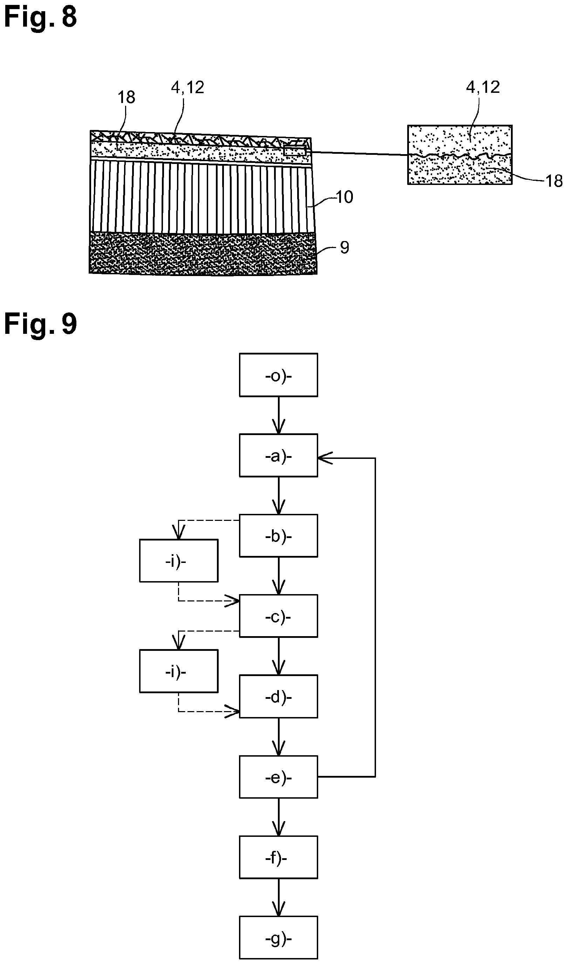

Les renforts fibreux des figures 5 et 7 peuvent être utilisés seuls ou en combinaison avec une couche de mousse 18 telle qu'illustrée à la figure 8. Cette couche 18 est intercalée entre les panneaux 10 et la couche abradable 4 et apporte plusieurs avantages. Elle permet notamment de réduire l'épaisseur de la couche 4 et donc la quantité de matière de la pâte à étaler pour réaliser cette couche. Elle réduit en outre les risques de fissuration et de problèmes liés à l'utilisation d'une couche 4 de forte épaisseur.

En variante, et selon un second aspect de l'invention, la couche de mousse 18 pourrait être utilisée sans renfort fibreux de la couche abradable 4.

La couche de mousse 18 a par exemple une épaisseur comprise entre 1 et 7mm, et de préférence entre 3 et 5mm. La somme des épaisseurs de la couche abradable 4 et de la couche de mousse 18 est de préférence inférieure ou égale à 10mm, et de préférence inférieure ou égale à 8mm.

La couche de mousse 18 est par exemple réalisée en matériau thermoplastique. Sa densité peut être comprise entre 20 et 100 Kg/m³;
Le carter 3 selon l'invention peut être fabriqué de la façon suivante :
- collage des panneaux 10 sur une surface annulaire interne de l'enveloppe 9,
- préparation de la pâte et étalement sur une surface annulaire interne, par exemple des panneaux 10, cette couche étant associée à au moins un renfort fibreux.

Dans le mode de réalisation de la figure 5, les fibres de renfort 12 sont mélangées à la pâte, préalablement à son étalement.

Dans la variante de réalisation de la figure 7, les nappes ou tissus de renfort 14 sont disposés sur la surface annulaire interne des panneaux 10 avant l'étalement de la pâte.

Enfin, dans le cas de la variante ou du second aspect de l'invention de la figure 8, la pâte est étalée sur la surface annulaire interne d'une couche de mousse 18 préalablement collée sur une surface annulaire interne des panneaux 10. La figure 9 est un organigramme ou un schéma bloc qui illustre les différentes étapes d'un procédé selon l'invention de fabrication d'un carter de turbomachine d'aéronef.

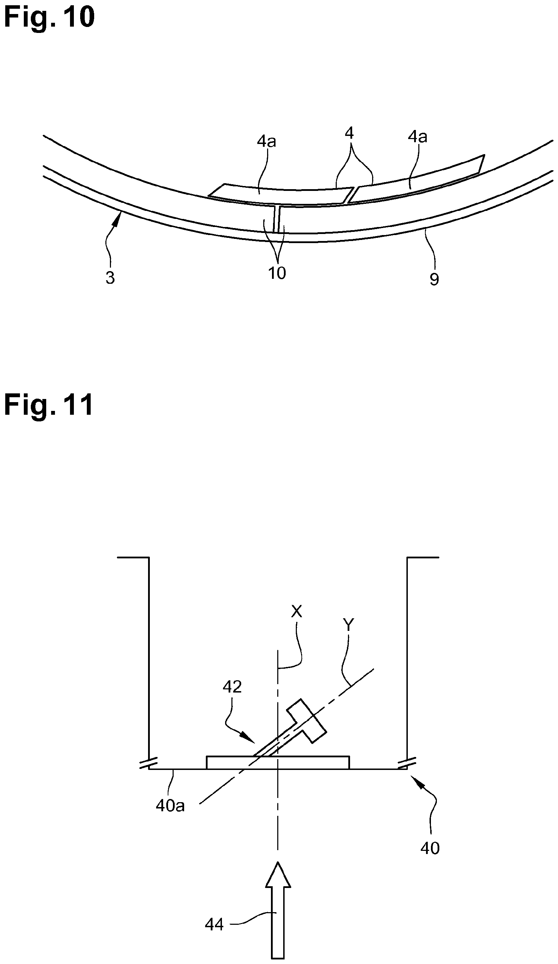

Comme évoqué dans ce qui précède et illustré à la figure 10, ce carter comprend :
- une enveloppe annulaire 9 s'étendant autour d'un axe A (non visible) et réalisée dans un matériau composite comportant des fibres tissées et noyées dans une résine,
- une couche annulaire 4 en matériau abradable s'étendant à l'intérieur de l'enveloppe, et
- des panneaux supports 10 s'étendant autour de l'axe A et intercalés entre l'enveloppe 9 et la couche abradable 4.

La particularité de ce carter 3 est que sa couche abradable 4 est formée par une pluralité de secteurs angulaires 4a disposés circonférentiellement bout à bout (autour de l'axe A) les uns après les autres.

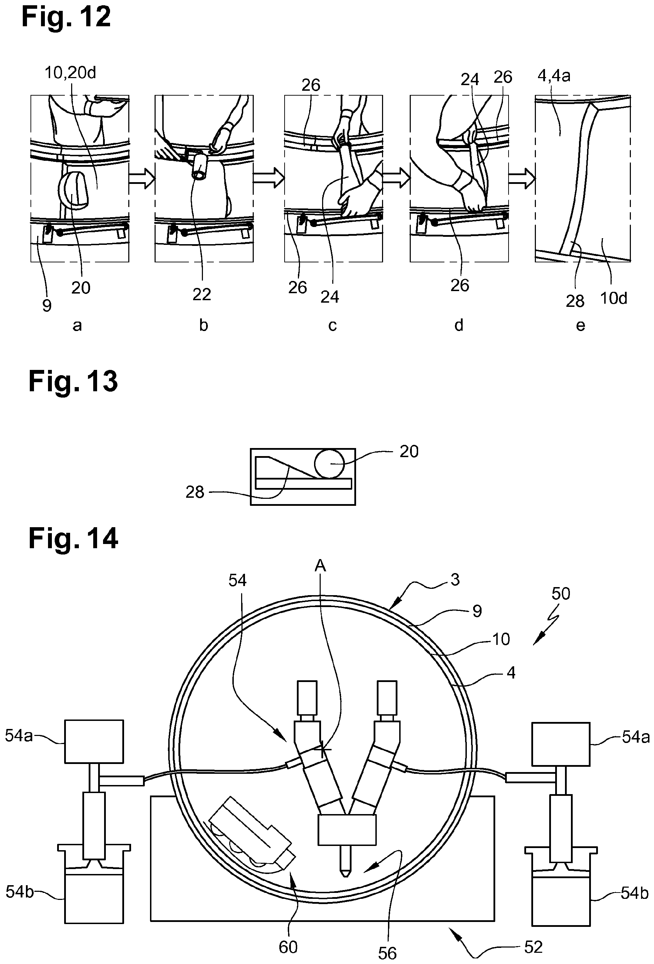

Le procédé selon l'invention de la figure 9 comprend plusieurs étapes dont certaines sont facultatives. C'est notamment le cas des étapes o), g) et i). Comme cela sera décrit plus en détail dans ce qui suit et illustré dans les dessins, le procédé peut être mis en oeuvre manuellement (figures 12a-12e et 13) mais il est avantageux de le mettre en oeuvre au moyen d'une installation au moins partiellement automatisée (figures 14 à 17).

Le procédé peut comprendre une étape préalable o) de collage des panneaux 10 sur la surface annulaire interne de l'enveloppe 3.

Le procédé comprend pour l'essentiel quatre étapes a), b), c) et d), qui sont répétées (étape e)) autant de fois que nécessaire :
a) la préparation d'une pâte 20 par mélange d'au moins deux composants,
b) la dépose de la pâte 20 sur une surface annulaire interne 10d des panneaux 10,
c) l'étalement de la pâte 20 au moyen d'au moins un rouleau 24 s'étendant sensiblement parallèlement à l'axe A et destinée à rouler sur des anneaux de guidage 26 disposés de part et d'autre des panneaux ou de l'enveloppe, coaxialement à celle-ci, de façon à former un secteur angulaire 4a de la couche abradable qui s'étend sur un angle prédéterminé autour de l'axe A, et
d) la formation d'un chanfrein 28 à une extrémité circonférentielle du secteur 4a ainsi formé.

Lors de l'étape e), les étapes a) à d) sont répétées jusqu'à ce que plusieurs secteurs angulaires 4a consécutifs de la couche abradable 4 soient formés et recouvrent l'intégralité de la surface interne des panneaux 10. Les secteurs formés à l'étape e) comportent chacun une extrémité circonférentielle recouvrant l'extrémité circonférentielle chanfreinée du secteur précédemment déposé (cf. figure 10).

Le carter 3 est de préférence positionné de façon à ce que l'axe A soit sensiblement horizontal lors des étapes b) à e).

La pâte est de préférence à base de résine époxyde, et est de préférence chargée par exemple avec des microbilles de verre. Elle est obtenue par mélange de deux composants au moins.

L'étape a) de préparation de la pâte 20 est de préférence réalisée au moyen d'une machine de mélange ou mixage. Elle n'est donc pas faite manuellement, car cela a tendance à favoriser l'apparition de bulles d'air dans la pâte qui, du fait de sa viscosité, se retrouve dans la couche abradable après polymérisation.

La figure 11 illustre de manière très schématique une telle machine de mélange. A l'étape a), les composants sont incorporés dans le pot 40 de la machine qui comprend au moins un élément rotatif 42 de mélange selon deux axes de rotation Y et Y non parallèles.

Cette machine est par exemple celle commercialisée par la société FlackTek sous l'appellation SpeedMixer^{®} DAC3000.

L'élément rotatif 42 de la machine tourne autour des axes X, Y à une vitesse comprise entre 400 et 1000 tours/minute, et de préférence entre 600 et 900 tours/minutes, et pendant une durée comprise entre 50 et 200 secondes, et de préférence entre 80 et 120 secondes.

Le pot 40 dans lequel est mélangée la pâte a de préférence un fond 40a amovible et extractible par translation axiale depuis l'intérieur jusqu'à l'extérieur du pot. Ce déplacement (cf. flèche 44) peut être réalisé au moyen d'un piston par exemple qui prend appui sur la surface inférieure du fond 40a. Lorsque le fond 40a est sorti du pot 40, sa surface supérieure peut être raclée pour retirer la totalité de la pâte et faciliter sa pose à l'étape suivante.

La pâte déposée à l'étape b) et destinée à former un secteur peut avoir une masse comprise entre 400 et 2600g.

Les figures 12a à 12e illustrent les étapes du procédé réalisées manuellement. La figure 12a illustre l'étape b) de dépose de la pâte 20 sous forme d'une boule ou d'un boudin sur la surface annulaire interne 10d des panneaux 10.

Les figures 12b et 12c illustrent l'étape c) d'étalement de la pâte 20 sur la surface 10d au moyen d'un rouleau 22 dans un premier temps qui permet de répartir la pâte (figure 11b), puis au moyen d'un rouleau profilé 24 dans un second temps qui permet de prendre appui sur les anneaux de guidage 26 d'épaisseur calibrée, de façon à uniformiser l'épaisseur de la pâte (figure 12c). La pâte 20 s'étend alors sur une portion angulaire prédéterminée de la surface 10d, et un chanfrein 28 est réalisé au niveau d'un bord circonférentiel de cette pâte à l'étape d) de façon à ce que la pâte destinée à être déposée et étalée sur une portion angulaire adjacente puisse recouvrir ce bord chanfreiné lors de l'étape e) (figures 12d, 12e et 13).

Les figures 14 et suivantes illustrent les étapes du procédé réalisées par une installation automatisée.

L'installation 50 de la figure 14 comprend notamment :
- un équipement 52 de mise en rotation du carter 3 autour de l'axe A lors de l'étape c) ou de chaque étape c),
- un équipement 54 de préparation de la pâte 20 basée sur le mélange décrit dans ce qui précède,
- un équipement 56 de dépose de la pâte 20 sous la forme d'un boudin ou d'une boule sur la surface interne des panneaux 10,
- un équipement 58 optionnel de raclage de la pâte 20 et de mise en préforme avant étalement,
- un équipement 60 d'étalement de la pâte à rouleaux 24 pour former chaque secteur 4a de la couche abradable,
- un équipement 62 optionnel de dévidement d'un film plastique 62 et d'insertion de ce film plastique 20 entre la pâte et les rouleaux d'étalement 24 de l'équipement 60,
- un équipement 64 optionnel de raclage de la surface interne de chaque secteur 4a après étalement, et
- un équipement 66 de découpe de l'extrémité circonférentielle de chaque secteur en vue de la formation du chanfrein 28.

L'équipement 52 peut comprendre un moteur électrique relié par des pignons à une roue d'entrainement du carter 3 autour de l'axe A.

L'équipement 54 comprend de préférence une machine 40 du type de celle décrite dans ce qui précède en relation avec la figure 11. Comme illustré dans

la figure 14, cette machine est reliée par des pompes 54a à des réservoirs 54b de stockage des composants à mélanger pour former la pâte.

L'équipement 56 comprend une tête de dépose de la pâte, cette tête pouvant être mobile selon un ou plusieurs axes pour optimiser la dépose de la pâte sur la surface interne des panneaux 10.

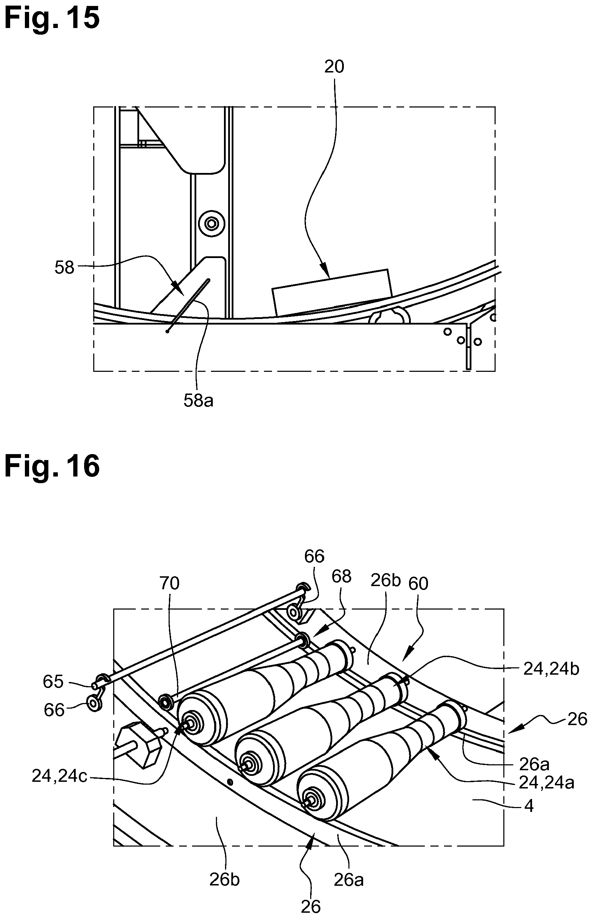

L'équipement 58 représenté à la figure 15 comprend au moins une lame 58a qui est destinée à venir au contact de la pâte 20 sous forme de boule ou boudin pour la comprimer et forcer son application et son étalement sur les panneaux et lui donner une préforme facilitant son étalement par les rouleaux 24.

Les rouleaux d'étalement 24 sont visibles à la figure 16 et comprennent par exemple un premier rouleau de plaquage 24a, un second rouleau de préformage 24b et un troisième rouleau de finition 24c. Comme évoqué dans ce qui précède, ces rouleaux 24 roulent sur des anneaux de guidage 26 montés de chaque côté des panneaux 10.

Les rouleaux 24 sont de préférence profilés et non cylindriques, comme visible dans les dessins, de façon à conférer à la surface interne des secteurs 4a une forme recherchée non cylindrique visible à la figure 1.

A titre d'exemple, les rouleaux 24 sont par exemple réalisés en matériau plastique. Le rouleau 24a permet d'obtenir une épaisseur de pâte majorée de 1mm par rapport à la côte finale souhaitée. Le rouleau 24b permet d'obtenir une épaisseur de pâte majorée de 0,5mm par rapport à la côte finale souhaitée. Le rouleau 24c permet d'obtenir une épaisseur de la pâte à la côte finale souhaitée.

Les anneaux de guidage 26 sont de préférence sollicités axialement l'un vers l'autre et en appui contre les panneaux 10 par des bandes élastiques 65 s'étendant entre les anneaux de guidage 26. Dans un exemple particulier, l'anneau de guidage 26 situé de chaque côté du carter 3 comprend une première bague annulaire 26a de roulage des rouleaux 24, qui a un diamètre interne D1, et une seconde bague annulaire 26b de maintien de la première bague 26a qui a un diamètre interne D2 qui est supérieur à D1.

La seconde bague 26b est en appui sur la première bague 26a qui est intercalée entre la seconde bague et les panneaux 10. La seconde bague 26b porte des crochets 66 de fixation de premières extrémités des bandes élastiques 65 dont les extrémités opposées sont fixées à des crochets 66 portés par la seconde bague 26b située du côté opposé au carter 3. Les secondes bagues 26b sont ainsi sollicitées axialement l'une vers l'autre par ces bandes élastiques 65 sollicitées en traction, et maintiennent ainsi axialement les premières bagues 26a de chaque côté des panneaux 10.

Les bagues 26a et 26b sont par exemple réalisées en fibres de carbone.

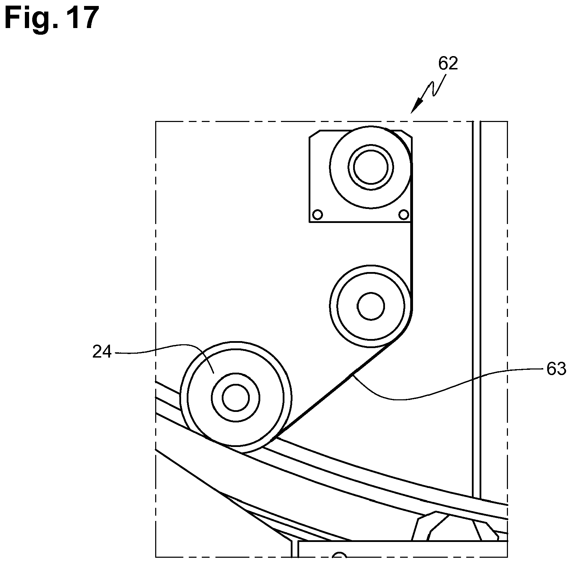

L'équipement 62 représenté à la figure 17 a pour but d'intercaler un film plastique 62 entre la pâte 20 et les rouleaux 24, ce film plastique empêchant le contact direct et le risque d'adhérence entre la pâte et les rouleaux d'étalement 24.

Le rouleau 24a peut alors être utilisé pour assurer le positionnement du film et le plaquer sur la pâte. Le rouleau 24b peut assurer la déformation du film et profiler la pâte.

L'équipement 64 est similaire à celui de la figure 15 et peut comprendre au moins une lame 58a qui est destinée à venir au contact du secteur 4a déjà formé pour parfaire l'état de surface de sa surface interne.

L'équipement 68 visible à la figure 16 peut comprendre un rouleau ou des disques de découpe 70 utilisé pour séparer la couche 4 de chaque côté des panneaux 10 et faciliter le démoulage après polymérisation. Ils peuvent aussi permettre de découper l'extrémité circonférentielle de chaque secteur 4a en vue de la formation du chanfrein 28 visible à la figure 13, lorsque cette découpe n'est pas réalisée manuellement.

La couche abradable 4 a une épaisseur comprise entre 3 et 10mm, et de préférence entre 5 et 8mm. Le chanfrein 28 formé à l'étape d) s'étend sur toute la dimension axiale du secteur 4a et est orienté à environ 45° par rapport à une normale à la surface interne de ce secteur.

Lors de l'étape f) suivante, la polymérisation de la pâte intervient. Elle peut avoir lieu à température ambiante ou en étuve.

Enfin, le procédé peut comprendre une étape finale g) d'usinage de finition de la surface interne de la couche abradable 4, lors de laquelle le carter 3 est positionné de sorte que son axe A soit sensiblement vertical.

## Revendications

1. Carter (3) de turbomachine d'aéronef, ce carter comportant :
- une enveloppe annulaire (9) s'étendant autour d'un axe A et réalisée dans un matériau composite comportant des fibres tissées et noyées dans une résine,
- une couche annulaire (4) en matériau abradable s'étendant à l'intérieur de l'enveloppe, autour de l'axe A, et obtenue par étalement et polymérisation d'une pâte, et
- des panneaux supports (10) s'étendant autour de l'axe A et intercalés entre l'enveloppe et la couche abradable,
**caractérisé en ce que** la couche abradable est déposée sur une surface annulaire interne d'une couche de mousse (18) qui est elle-même déposée sur une surface annulaire interne (10d) des panneaux (10).

2. Carter (3) selon la revendication 1, dans lequel la couche de mousse (18) a une épaisseur comprise entre 1 et 7mm, et de préférence entre 3 et 5mm.

3. Carter (3) selon la revendication 2, dans lequel la somme des épaisseurs de la couche abradable (4) et de la couche de mousse (18) est inférieure ou égale à 10mm, et de préférence inférieure ou égale à 8mm.

4. Carter (3) selon l'une des revendications précédentes, dans lequel la couche de mousse (18) est réalisée en matériau thermoplastique.

5. Carter (3) selon l'une des revendications précédentes, dans lequel la couche de mousse (18) a une densité comprise entre 20 et 100 Kg/m³.

6. Carter (3) selon l'une des revendications précédentes, dans lequel la couche abradable (4) est associée à au moins un renfort fibreux choisi parmi des fibres de renfort (12) et des nappes ou tissus de renfort (14).

7. Carter (3) selon la revendication précédente, dans lequel les panneaux (10) sont séparés les uns des autres par des jeux (J) comblés avec ladite pâte, au moins certains des nappes ou tissus (14) recouvrant ces jeux.

8. Turbomachine d'aéronef, comportant un carter (3) selon l'une des revendications précédentes, en particulier qui s'étend autour d'une soufflante de cette turbomachine.

9. Procédé de fabrication d'un carter (3) selon l'une des revendications 1 à 7, dans lequel il comprend les étapes de :
- collage des panneaux (10) sur une surface annulaire interne de l'enveloppe (9),
- collage de la couche de mousse (18) sur une surface annulaire interne (10d) des panneaux (10), et
- préparation de la pâte et étalement sur une surface annulaire interne de la couche de mousse (18).

10. Procédé selon la revendication 9, dans lequel des fibres de renfort (12) sont mélangées à la pâte, préalablement à son étalement, ou des nappes ou tissus de renfort (14) sont disposés sur la surface annulaire interne de la mousse (18) avant l'étalement de la pâte sur cette surface.

## Patentansprüche

1. Gehäuse (3) eine Turbomaschine eines Flugzeugs, wobei dieses Gehäuse umfasst:
- eine ringförmige Schale (9), die sich um eine Achse A erstreckt und aus einem Verbundmaterial gefertigt ist, das gewebte und in einem Harz getauchte Fasern umfasst;
- eine ringförmige Schicht (4) aus abreibbarem Material, die sich im Inneren der Hülle um die Achse A erstreckt, und durch Verschmieren und Polymerisieren einer Paste erhalten wird, und
- Trägerplatten (10), die sich um die Achse A erstrecken, und zwischen der Hülle und der abreibbaren Schicht eingesetzt sind,
**dadurch gekennzeichnet, dass** die abreibbare Schicht auf einer ringförmigen Innenoberfläche einer Schaumstoffschicht (18) abgelegt ist, die selbst auf einer ringförmigen Innenoberfläche (10d) der Platten (10) abgelegt ist.

2. Gehäuse (3) nach Anspruch 1, wobei die Schaumstoffschicht (18) eine Dicke aufweist, die zwischen 1 und 7 mm, und vorzugsweise zwischen 3 und 5 mm liegt.

3. Gehäuse (3) nach Anspruch 2, wobei die Summe der Dicken der abreibbaren Schicht (4) und der Schaumstoffschicht (18) kleiner oder gleich 10 mm, und vorzugsweise kleiner oder gleich 8 mm ist.

4. Gehäuse (3) nach einem der vorstehenden Ansprüche, wobei die Schaumstoffschicht (18) aus einem thermoplastischen Material gefertigt ist.

5. Gehäuse (3) nach einem der vorstehenden Ansprüche, wobei die Schaumstoffschicht (18) eine Dichte aufweist, die zwischen 20 und 100 Kg/m³ liegt.

6. Gehäuse (3) nach einem der vorstehenden Ansprüche, wobei die abreibbare Schicht (4) mindestens einer faserigen Verstärkung zugeordnet ist, die aus Verstärkungsfasern (12) und Verstärkungsbahnen oder -geweben (14) ausgewählt ist.

7. Gehäuse (3) nach dem vorstehenden Anspruch, wobei die Platten (10) durch Spiele (J) voneinander getrennt sind, die durch die Paste ausgefüllt werden, wobei zumindest bestimmte der Bahnen oder Gewebe (14) diese Spiele abdecken.

8. Turbomaschine eines Flugzeugs, das ein Gehäuse (3) nach einem der vorstehenden Ansprüche beinhaltet, das sich insbesondere um ein Gebläse dieser Turbomaschine erstreckt.

9. Verfahren zur Herstellung eines Gehäuses (3) nach einem der Ansprüche 1 bis 7, wobei es die Schritte umfasst zum:
- Kleben der Platten (10) auf eine ringförmige Innenoberfläche der Hülle (9),
- Kleben der Schaumstoffschicht (18) auf eine ringförmige Innenoberfläche (10d) der Platten (10), und
- Zubereiten der Paste und Verschmieren auf einer ringförmigen Innenoberfläche der Schaumstoffschicht (18).

10. Verfahren nach Anspruch 9, wobei Verstärkungsfasern (12) mit der Paste vor deren Verschmieren vermischt werden, oder Verstärkungsbahnen oder -gewebe (14) auf der ringförmigen Innenoberfläche des Schaumstoffs (18) vor dem Verschmieren der Paste auf dieser Oberfläche angeordnet werden.

## Claims

1. A casing (3) of an aircraft turbomachine, this casing comprising:
- an annular envelope (9) extending around an axis A and made of a composite material comprising fibres which are woven and embedded in a resin,
- an annular layer (4) of abradable material extending inside the envelope, around the axis A, and obtained by spreading and polymerizing a paste, and
- support panels (10) extending around the axis A and interposed between the envelope and the abradable layer,
**characterised in that** the abraAdable layer is deposited on an internal annular surface of a foam layer (18) which is itself deposited on an internal annular surface (10d) of the panels (10).

2. The casing (3) according to claim 1, wherein the foam layer (18) has a thickness of between 1 and 7mm, and preferably between 3 and 5mm.

3. The casing (3) according to claim 2, wherein the sum of the thicknesses of the abradable layer (4) and the foam layer (18) is less than or equal to 10mm, and preferably less than or equal to 8mm.

4. The casing (3) according to one of the preceding claims, wherein the foam layer (18) is made of thermoplastic material.

5. The casing (3) according to one of the preceding claims, wherein the foam layer (18) has a density of between 20 and 100 Kg/m³.

6. The casing (3) according to one of the preceding claims, wherein the abradable layer (4) is associated with at least one fibrous reinforcement selected from reinforcing fibres (12) and reinforcing lap or fabrics (14).

7. The casing (3) according to the preceding claim, wherein the panels (10) are separated from each other by clearances (J) filled with said paste, at least some of the laps or fabrics (14) covering these clearances.

8. An aircraft turbomachine, comprising a casing (3) according to one of the preceding claims, in particular which extends around a fan of this turbomachine.

9. A method of manufacturing a casing (3) according to one of claims 1 to 7, wherein it comprises the steps of:
- gluing the panels (10) to an internal annular surface of the envelope (9),
- gluing the foam layer (18) to an internal annular surface (10d) of the panels (10), and
- preparing the paste and spreading it on an internal annular surface of the foam layer (18).

10. The method according to claim 9, wherein reinforcing fibres (12) are mixed into the paste, before it is spread, or reinforcing laps or fabrics (14) are arranged on the internal annular surface of the foam (18) before the paste is spread on this surface.
